# EUROPEAN PATENT APPLICATION

(11) **EP 2 520 908 A1**
(43) Date of publication of application: **07.11.2012**
(21) Application number: 12165406.5
(22) Date of filing: 24.04.2012
(51) Int. Cl.: G01F 15/06, G01F 23/36, G01F 15/00, G01F 15/07

(54) **Device for driving a solenoid valve associated to a flow counter by means of a remote system, and for sending the lpg level of a tank to said remote system**

(30) Priority: 27.04.2011 IT BO20110032 U
(71) Applicant: Alfa Centauri S.p.A., 66016 Guardiagrele (CH) (IT)
(72) Inventor: Tabellario, Mario, 65122 Pescara (IT)
(74) Representative: Dall'Olio, Christian

(57) **Abstract**

A device for activating, via a remote system, a solenoid associated to an LPG counter, the LPG counter being activatable such as to occlude/enable passage of LPG through the counter (1) and directed towards one or more users, and for sending, to the remote system, a measurement of the level of LPG in the tank (8), detected by a level indicator (9), the device also being associated to the LPG counter and comprising: an electrical detecting device of a consumption of the LPG; an electronic board (C) which receives in input, and processes, the electrical signals generated by the detecting device and comprising means for transmitting, via electromagnetic waves, at least the data concerning the detecting of the LPG consumption, the board (C) being electrically connected to the solenoid valve (3); a protective mask (6) electrically connected to the front surface of the counter (1); a level indicator (9), associated to the tank (8), provided with a sensor for detecting the level of the liquid contained internally of the tank (8), connected to the board (C), the board (C) further comprising means for receiving and processing the significant data relating to the liquid level of the LPG internally of the tank (8).

## Description

### DESCRIPTION OF THE INVENTION

The present invention relates to the technical sector of apparatus associated to LPG counters which comprise an integrated solenoid for occluding the flow of LPG directed towards one or more users, with the counters being for detecting and transmitting, via electromagnetic waves, data concerning LPG consumption, and relates also to apparatus associated to LPG tanks for detecting the level of the liquid in the tanks.

The prior art comprises EP publication EP 2 029 975 in the name of the same applicant; in this document an apparatus is provided for activating a solenoid associated to a gas counter, with the solenoid activatable for enabling passage of gas through the counter and directed towards one or more users.

The apparatus comprises: an electrical device for detecting a consumption of gas, suitable for generating electrical signals in output representing a quantity of gas flowing through the counter; an electronic board, connected electrically to the solenoid valve and the electrical device, which receives, in input, and processes the electrical signals generated by the detecting device, comprising means for transmitting and receiving data concerning the detection of the gas consumption; a protective mask of the control board, the electrical detecting device, the connection between the control board and the detecting device, and between the solenoid valve and the control board, the mask being applied to the front surface of the counter; sensor means, connected to the control board, for detecting the removal of the mask.

The apparatus enables real-time detecting of the effective consumption of the gas and the activating of the solenoid valve for enabling/occluding the flow of gas towards the user and avoiding intervention at the user on the part of an operator.

Apparatus are known for detecting a liquid level contained internally of an LPG tank which comprise a sensor for detecting an orientation of the magnetic field produced by a magnet installed on a mechanical level indicator, representing a quantity of liquid contained internally of the tank.

The sensor comprises a functional connection with an external unit, destined to process the data received from the sensor and to transmit the said data wirelessly to a remote system for optimal management of the filling service of the LPG tanks.

It is clear that the use of the previously-described apparatus for occluding/enabling LPG flow directed towards one or more users and the apparatus for detecting the level of the liquid contained in the LPG tank are apparatus that communicate with two distinct units that singly transmit the corresponding data to a remote system, with all the ensuing drawbacks.

The advantage of the present invention is that it provides a device enabling correct remote and/or automatic performing of all the electromechanical operations which are necessary on an LPG counter, such as, in particular, the activating, via a remote system, of a solenoid valve associated to an LPG counter for enabling/occluding the LPG flow towards the user and for sending, to the remote system, the measurement of the LPG tank level; this objective is desirable so that the components used for performing the operations can be minimised.

A further advantage of the invention is to provide a device that enables verifying real consumption of each user and guaranteeing programmed replenishing of the LPG tank, totally excluding the user from controlling the tank level.

A further advantage of the invention is to provide a device that respects the safety standards set by the regulations, which is reliable, functional and has relatively contained costs with respect to the advantages it offers.

The above advantages are obtained according to the contents of the claims.

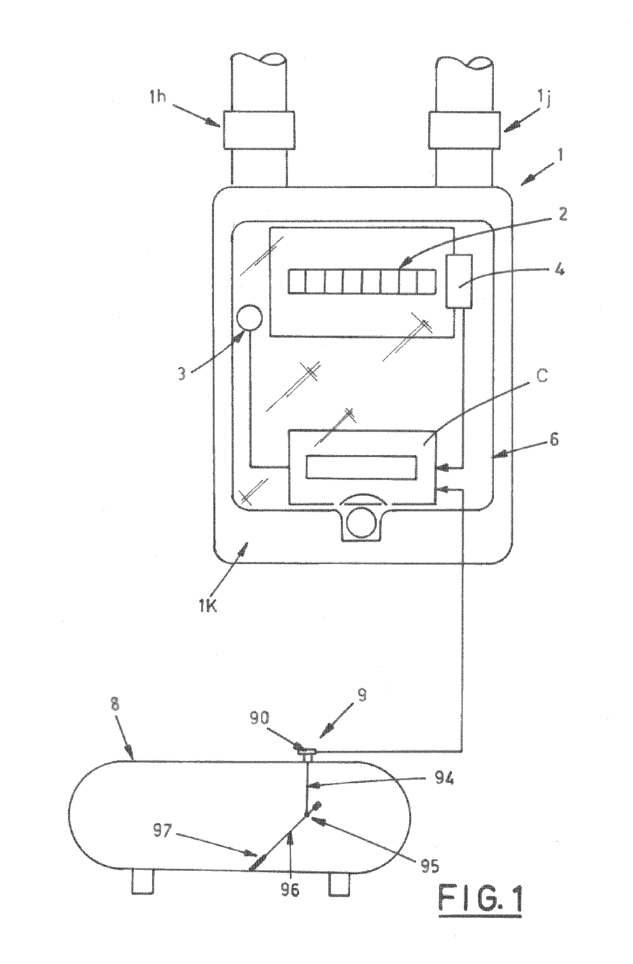

The characteristics of the invention will be set out in the following, in which a preferred but not exclusive embodiment of the invention is provided, with reference to accompanying table of drawings, in which figure 1 illustrates a schematic view of the device for activating, by means of a remote system, a solenoid valve associated to an LPG counter and for sending, to the remote system, the measurement of the level of LPG in the tank.

With reference to the accompanying tables of drawings, 1 denotes an LPG counter of known type, comprising: a roller numerical totaliser 2; a solenoid valve, functionally interposed between the inlet conduit 1h h and the outlet conduit 1j of the LPG of the counter 1, for occluding or enabling passage of the LPG towards one or more users; an electronic detecting device 4 of LPG consumption, of known type, functionally connected to the numerical totaliser 2 and destined to emit in outlet an electrical pulse for each revolution completed by the numerical totaliser 2; an electronic board C, connected electrically to the solenoid valve 3 and to the electronic detecting device 4, comprising means, not illustrated, for receiving and transmitting signals from and towards a remote system, also not illustrated, by means of electromagnetic waves; a protective mask 6, fixed to the front wall 1k k of the counter 1, which separates the numerical totaliser 2 from the external environment, the detecting device 4, the board C and all the electrical functional connections between them and the between the board C and the solenoid valve 3.

Reference numeral 8 denotes a known LPG tank and 9 denotes a known level indicator for detecting the level of the liquid contained in the tank 8.

The level indicator 9 is hermetically fixed to the LPG tank and is of a type comprising, as schematically illustrated in figure 1, a float 97 connected by means of a rod 96 to a gearing 95, which in turn is functionally connected to a vertical spindle 94 which at a top thereof, closed to the head of the level indicator 9, bears a permanent magnet (not illustrated).

A sensor (not illustrated) is located in the upper head 90 of the indicator 9, for detecting the orientation of the magnetic field produced by the permanent magnet, for example of a type described in detail in patent application for utility model no. BO2006U000048 in the name of the same applicant.

Via a connecting cable the sensor is connected to the board C provided on the counter, the board being for processing the data received by the sensor and for transmitting the said data wirelessly to the remote system.

Note that the protective mask 6 also separates the electrical function connection between the board and the sensor of the level indicator 9 from the outside environment.

The device of the present invention comprises: the detecting device 4, the board C, the relative electrical connection that branch from the board C and connect the board with the detecting device 4, with the solenoid valve and with the sensor of the level indicator, and further the protective mask 6.

In a known way, the electric board C receives in inlet the electrical pulses emitted by the detecting device 4, processes them such as to extrapolate the information associated to the instant-by-instant consumption of LPG and memorises the information in a memory (not indicated); the memory is therefore constantly updated with the representative value of the real consumption of the LPG associated to the user, which can be derived from the value indicated by the numerical totaliser 2 of the counter 1.

The electric board C further receives in inlet the data extrapolated by the angular position sensor associated to the level indicator 9 relatively to the quantity of liquid contained internally of the tank 8.

The data representing the LPG consumption can reach the remote system by means of a periodical sending of the data of the board C, with an automatic procedure, obviously following request for the data from the remote system itself, by means of the remote system sending a suitable control signal.

Thus the remote system constantly receives updated information concerning the real consumption of LPG measured by the numerical totaliser 2 and the LPG level contained in the tank 8; with this data it is advantageously possible:
to remotely command the activating of the solenoid valve 3 via the board C, such as to occlude/enable the flow of LPG towards the user;
forecast the programmed replenishing of the tank, in a case in which the percentage of volume of residual liquid contained in the tank is close to a minimum reference value.

In this way, with simple distance commands of the remote system, it is possible to determine the closing/opening of the LPG by activating the solenoid valve 3 into the occluding/enabling configuration of the LPG flow directed towards one or more users and/or indicate the need for a timely replenishing of the tank 8.

With the device of the present invention the LPG effectively consumed can be properly billed without any need for an estimation of LPG consumption; in fact, with the effective consumption of LPG detected by the counter 1 the LPG can be debited to the user only after it has been effectively consumed, for example with easy instalments split up over a year, without the consumer having to pay each time the tank is filled.

A further advantage of the use of the described device derives from the fact that it is possible to send and process the data collected by the level indicator relating to the value of the liquid contained in the tank to a single board, i.e. the same board which manages and controls the LPG counter 1.

It follows that with a single board it is possible to dialog with the remote system, thus reducing to a minimum the components used for performing both the management of the counter 1 and the detecting of the level in the tank 8.

With the present invention it is further advantageous to include the use of sensor means, functionally connected to the tank and to the electronic board C, able to detect damage to the LPG tank and/or the level detector which determines the definition of a state of error in the board C, which in turn sends a remote alarm signal such as to guarantee an immediate maintenance intervention.

A further advantage of the invention consists in having defined a device that satisfies the safety standards set by the regulation, as it is reliable, functional and has relatively contained costs with respect to the advantages that are attained.

The above-described, however, is described herein by way of non-limiting example, and therefore any modifications to details thereof, as well as any variations in shape and dimensions, are understood to fall within the scope of protection thereof, as claimed in the following.

## Claims

1. A device for activating, via a remote system, a solenoid associated to an LPG counter, the LPG counter being activatable such as to occlude/enable passage of LPG through the counter (1) and directed towards one or more users, and for sending, to the remote system, a measurement of the level of LPG in the tank (8), detected by a level indicator (9), the device also being associated to the LPG counter and comprising: an electrical detecting device of a consumption of the LPG, suitable for generating in outlet electrical signals representing the quantity of LPG that flows through the counter (1); an electronic board (C) which receives in inlet, and processes, the electrical signals generated by the detecting device and comprising means for transmitting, via electromagnetic waves, at least the data concerning the detecting of the LPG consumption, the board (C) being electrically connected to the solenoid valve (3), comprising means for receiving and transmitting signals from and towards a remote system by means of electromagnetic waves; a protective mask (6) which separates the detecting device (4), the board (C) and all the electrical functional connections between them and between the board (C) and the solenoid valve (3) from an external environment; a level indicator (9), associated to the tank (8), provided with a sensor for detecting the level of the liquid contained internally of the tank (8), **characterised in that** it comprises the technical functional connection between the sensor of the level indicator (9) and the board (C) and **in that** the electronic board (C) further comprises means for receiving and processing the significant data relating to the liquid level of the LPG internally of the tank (8).

2. The device of claim 1, **characterised in that** the protective mask (6) further separates from the external environment the electrical functional connection between the board (C) and the sensor of the level indicator (9).

3. The device of claim 1, **characterised in that** it comprises sensor means, functionally connected to the tank (8) and to the electronic board (C), able to detect damage to the LPG tank and/or to the level detector of the liquid contained in the tank.
